# EUROPÄISCHE PATENTSCHRIFT

(11) **EP 0 815 182 B1**
(45) Veröffentlichungstag und Bekanntmachung des Hinweises auf die Patenterteilung: **20.09.2000**
(21) Anmeldenummer: 96905854.4
(22) Anmeldetag: 02.03.1996
(51) Int. Cl.: C09K 19/30, C09K 19/42, G02F 1/1337

(54) **ELEKTROOPTISCHE FLÜSSIGKRISTALLANZEIGE**
ELECTRO-OPTICAL LIQUID CRYSTAL DISPLAY
AFFICHAGE ELECTRO-OPTIQUE A CRISTAUX LIQUIDES

(30) Priorität: 15.03.1995 DE 19509410
(43) Veröffentlichungstag der Anmeldung: 07.01.1998
(73) Patentinhaber: MERCK PATENT GmbH, 64293 Darmstadt (DE)
(72) Erfinder: PAUSCH, Axel, D-64342 Seeheim (DE); TARUMI, Kazuaki, D-64342 Seeheim (DE); REIFFENRATH, Volker, D-64380 Rossdorf (DE)
(86) Internationale Anmeldenummer: EP9600887
(87) Internationale Veröffentlichungsnummer: WO9628521

(56) Entgegenhaltungen:
- EP-A- 0 450 368
- EP-A- 0 474 062
- EP-A- 0 662 502
- WO-A-88/02130

## Beschreibung

Die Erfindung betrifft eine elektrooptische Flüssigkristallanzeige mit einer Umorientierungsschicht zur Umorientierung der Flüssigkristalle, deren Feld eine signifikante Komponente parallel zur Flüssigkristallschicht aufweist, enthaltend ein flüssigkristallines Medium mit negativer dielektrischer Anisotropie, dadurch gekennzeichnet, daß das Medium eine Doppelbrechung (Δn) < 0,10 aufweist und
mindestens eine mesogene Verbindung der Formel I enthält; 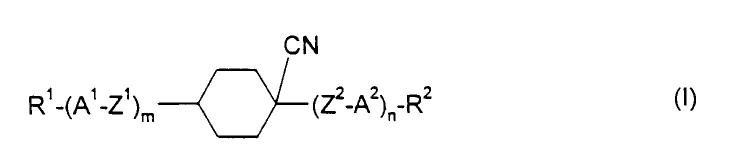 und mindestens eine Verbindung der Formel II 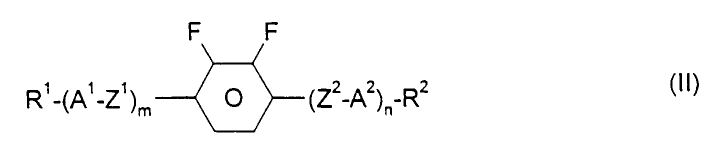 worin jeweils
- R¹ und R²: jeweils einen unsubstituierten, einen einfach durch CN oder CF₃ oder einen mindestens einfach durch Halogen substituierten Alkyl- oder Alkenylrest mit 1 bis 15 C-Atomen, wobei in diesen Resten auch eine oder mehrere CH₂-Gruppen jeweils unabhängig voneinander durch -O-, -S-, 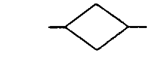 -CO-, -CO-O-, -O-CO- oder -O-CO-O- so ersetzt sein können, daß O-Atome nicht direkt miteinander verknüpft sind,
- A¹ und A²: jeweils unabhängig voneinander einen
(a) trans-1,4-Cyclohexylenrest, worin auch eine oder mehrere nicht benachbarte CH₂-Gruppen durch -O- und/oder -S- ersetzt sein können,
(b) 1,4-Phenylenrest, worin auch eine oder zwei CH-Gruppen durch N ersetzt sein können,
(c) Rest aus der Gruppe 1,4-Cyclohexenylen, 1,4-Bicyclo(2,2,2)-octylen, Piperidin-1,4-diyl, Naphthalin-2,6-diyl, Decahydronaphthalin-2,6-diyl und 1,2,3,4-Tetrahydronaphthalin-2,6-diyl,
wobei die Reste (a) und (b) durch ein oder zwei Fluor substituiert sein können,
- Z¹ und Z²: jeweils unabhängig voneinander -CO-O-, -O-CO-, -CH₂O-, -OCH₂-, -CH₂CH₂-, -CH=CH-, -C≡C- oder eine Einfachbindung, einer der Reste Z¹ und Z² auch -(CH₂)₄- oder -CH=CH-CH₂CH₂-,
- m und n: 0, 1 oder 2 und
- m+n: 1, 2 oder 3
bedeuten.

In herkömmlichen Flüssigkristallanzeigen (TN, STN, OMI, AMD-TN) werden die elektrischen Felder zur Umorientierung im wesentlichen senkrecht zur Flüssigkristallschicht erzeugt.

EP 0 474 062, EP 0 450 368 und WO 88/02130 beschreiben dielektrisch negative Flüssigkristallmischungen für die Verwendung in ECB-Anzeigen mit relativ geringen Beträgen des Δε und im Fall von EP 0 450 368 und WO 88/02130 mit relativ großer Doppelbrechung.

EP 0 662 502 beschreibt Flüssigkristallmischungen für MIM-Anzeigen mit positiver dielektrischer Anisotropie, die dielektrisch negative Verbindungen enthalten.

EP 0 667 555 und EP 0 673 986 stellen dielektrisch negative Flüssigkristallmischungen für IPS-Anzeigen vor.

In der internationalen Patentanmeldung WO 91/10936 wird eine Flüssigkristallanzeige offenbart, in der die elektrischen Signale so erzeugt werden, daß die elektrischen Felder eine signifikante Komponente parallel zur Flüssigkristallschicht aufweisen (IPS, In-Plane-Switching). Die Prinzipien, solch eine Anzeige zu betreiben, werden z.B. beschrieben von R.A. Soref in Journal of Applied Physics, Vol. 45, Nr. 12, S. 5466-5468 (1974).

In der EP 0 588 568 werden verschiedene Möglichkeiten zum Ansteuern solch einer Anzeige offenbart.

Diese IPS-Anzeigen können mit flüssigkristallinen Materialien entweder mit einer positiven oder mit einer negativen Dielektrizitätsanisotropie (Δε ≠ 0) betrieben werden. Unter anderem wird dort eine IPS-Anzeige enthaltend die Mischung ZLI-2806 (E. Merck, Darmstadt) mit negativer Dielektrizitätanisotropie beschrieben.

Diese Mischung basiert auf Verbindungen, welche ein Strukturelement der Formel A aufweisen. Mit diesem Material werden in IPS-Anzeigen jedoch relativ hohe Schwellspannungen und lange Schaltzeiten erzielt. Es bestand daher die Aufgabe, flüssigkristalline Materialien aufzuzeigen die geeignet sind, bei IPS-Anzeigen relativ niedrige Schwellspannungen und kurze Schaltzeiten zu erzielen.

Diese Aufgabe wurde überraschenderweise gelöst durch Einsatz von flüssigkristallinen Materialien, dadurch gekennzeichnet, daß das Medium eine Doppelbrechung (Δn) < 0,10 aufweist und
mindestens eine mesogene Verbindung der Formel I enthält; 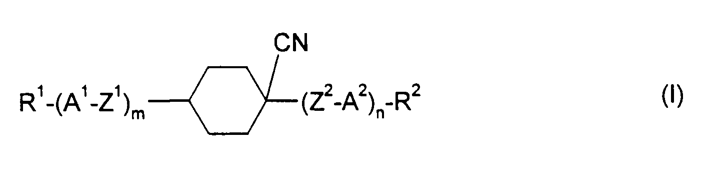 und mindestens eine Verbindung der Formel II 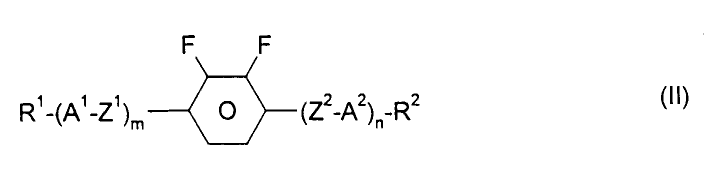 worin jeweils
- R¹ und R²: jeweils einen unsubstituierten, einen einfach durch CN oder CF₃ oder einen mindestens einfach durch Halogen substituierten Alkyl- oder Alkenylrest mit 1 bis 15 C-Atomen, wobei in diesen Resten auch eine oder mehrere CH₂-Gruppen jeweils unabhängig voneinander durch -O-, -S-, 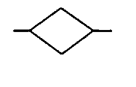 -CO-, -CO-O-, -O-CO- oder -O-CO-O- so ersetzt sein können, daß O-Atome nicht direkt miteinander verknüpft sind,
- A¹ und A²: jeweils unabhängig voneinander einen
(a) trans-1,4-Cyclohexylenrest, worin auch eine oder mehrere nicht benachbarte CH₂-Gruppen durch -O- und/oder -S- ersetzt sein können,
(b) 1,4-Phenylenrest, worin auch eine oder zwei CH-Gruppen durch N ersetzt sein können,
(c) Rest aus der Gruppe 1,4-Cyclohexenylen, 1,4-Bicyclo(2,2,2)-octylen, Piperidin-1,4-diyl, Naphthalin-2,6-diyl, Decahydronaphthalin-2,6-diyl und 1,2,3,4-Tetrahydronaphthalin-2,6-diyl,
wobei die Reste (a) und (b) durch ein oder zwei Fluor substituiert sein können,
- Z¹ und Z²: jeweils unabhängig voneinander -CO-O-, -O-CO-, -CH₂O-, -OCH₂-, -CH₂CH₂-, -CH=CH-, -C≡C- oder eine Einfachbindung, einer der Reste Z¹ und Z² auch -(CH₂)₄- oder -CH=CH-CH₂CH₂-,
- m und n: 0, 1 oder 2 und
- m+n: 1, 2 oder 3
bedeuten.

Solche Verbindungen sind z.B. bekannt aus der EP 0 107 759 (Formel A) und der EP 0 332 007 (Formel B).

Es gibt darin jedoch keinen Hinweis, daß man mit Hilfe dieser Substanzen die Schwellspannungen und die Schaltzeiten von IPS-Anzeigen verbessern kann.

Gegenstand der Erfindung ist somit eine elektrooptische Flüssigkristallanzeige mit einer Umorientierungsschicht zur Umorientierung der Flüssigkristalle, deren Feld eine signifikante Komponente parallel zur Flüssigkristallschicht aufweist, enthaltend ein flüssigkristallines Medium mit negativer dielektrischer Anisotropie, wobei das Medium eine Doppelbrechung (Δn) < 0,10 aufweist und mindestens eine mesogene Verbindung der Formel I enthält und mindestens eine Verbindung der Formel II.
a) Bevorzugte Ausführungsformen sind IPS-Anzeigen, wobei und mindestens eine Verbindung der Formel II 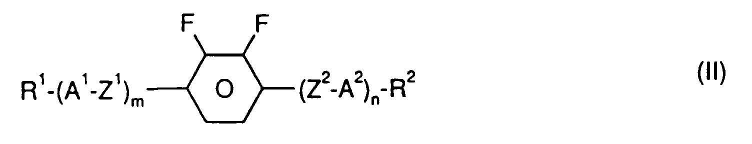 worin jeweils
   - R¹ und R²: jeweils einen unsubstituierten, einen einfach durch CN oder CF₃ oder einen mindestens einfach durch Halogen substituierten Alkyl- oder Alkenylrest mit 1 bis 15 C-Atomen, wobei in diesen Resten auch eine oder mehrere CH₂-Gruppen jeweils unabhängig voneinander durch -O-, -S-, 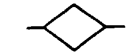 -CO-, -CO-O-, -O-CO- oder -O-CO-O- so ersetzt sein können, daß O-Atome nicht direkt miteinander verknüpft sind,
   - A¹ und A²: jeweils unabhängig voneinander einen
   (a) trans-1,4-Cyclohexylenrest, worin auch eine oder mehrere nicht benachbarte CH₂-Gruppen durch -O- und/oder -S- ersetzt sein können,
   (b) 1,4-Phenylenrest, worin auch eine oder zwei CH-Gruppen durch N ersetzt sein können,
   (c) Rest aus der Gruppe 1,4-Cyclohexenylen, 1,4-Bicyclo(2,2,2)-octylen, Piperidin-1,4-diyl, Naphthalin-2,6-diyl, Decahydronaphthalin-2,6-diyl und 1,2,3,4-Tetrahydronaphthalin-2,6-diyl,
   wobei die Reste (a) und (b) durch ein oder zwei Fluor substituiert sein können,
   das Medium eine dielektrische Anisotropie Δε < -4,6 aufweist, vorzugsweise zwischen -4,7 und -8;
b) das Medium mindestens eine Verbindung der Formel III enthält,

   R³-(A³-Z³)ₒ-A⁴-R⁴ III

   worin
   - R³ und R⁴: jeweils unabhängig voneinander die für R¹ angegebene Bedeutung besitzen,
   - A³ und A⁴: jeweils unabhängig die für A¹ und A² angegebene Bedeutung besitzen,
   - Z³: jeweils unabhängig voneinander die für Z¹ und Z² angegebene Bedeutung aufweist, und
   - o: 1, 2 oder 3 ist;

Weiterhin bevorzugt ist eine IPS-Anzeige, wobei die Bildelemente mittels Aktivmatrix angesteuert werden.

Ein weiterer Gegenstand der Erfindung ist ein flüssigkristallines Medium mit negativer dielektrischer Anisotropie, welches mindestens eine Verbindung der Formel I und mindestens eine Verbindung der Formel II enthält, insbesondere welches
- 15 bis 65, vorzugsweise 20 bis 60 Gew.% mindestens einer Verbindung der Formel I,
- 15 bis 45, vorzugsweise 20 bis 40 Gew.% mindestens einer Verbindung der Formel II,
- 10 bis 55, vorzugsweise 10 bis 50 Gew.% mindestens einer Verbindung der Formel III,
enthält.

Vorzugsweise enthält das erfindungsgemäße flüssigkristalline Medium:
- mindestens eine Verbindung der Formel la 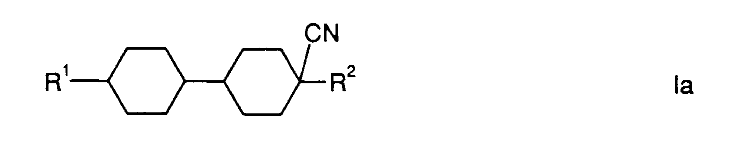
- mindestens eine Verbindung der Formel IIa, 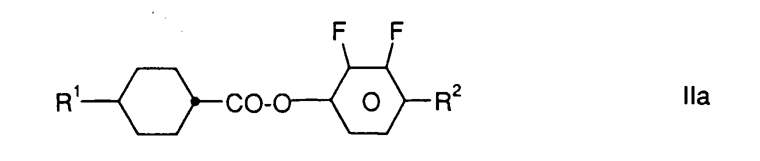
- mindestens eine Verbindung ausgewählt aus den Formeln IIIa, IIIb und IIIc, 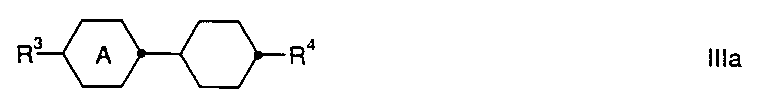 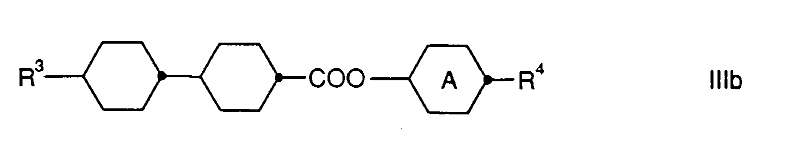 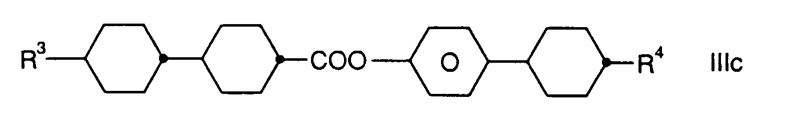 worin 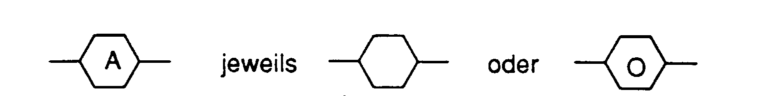 bedeutet, und R¹, R², R³ und R⁴ die jeweils angegebene Bedeutung besitzen.

Die erfindungsgemäßen flüssigkristallinen Medien weisen in der Regel eine Doppelbrechung (Δn) < 0,10 auf, vorzugsweise ist Δn zwischen 0,04 und 0,09, insbesondere zwischen 0,05 und 0,07.

Die Fließ-Viskosität (bei 20 °C) der erfindungsgemäßen Materialien ist in der Regel kleiner als 30 mm² s⁻¹, insbesondere zwischen 15 und 25 mm² s⁻¹. Der spezifische Widerstand der erfindungsgemäßen Materialien ist in der Regel bei 20 °C zwischen 5 x 10¹⁰ und 5 x 10¹³ Ω · cm¹.

Es wurde gefunden, daß bereits ein relativ geringer Anteil an Verbindungen der Formel I im Gemisch mit üblichen Flüssigkristallmaterialien, insbesondere jedoch mit einer oder mehreren Verbindungen der Formel II und/oder III zu einer beträchtlichen Erniedrigung der Schwellspannung und zu schnellen Schaltzeiten führt, wobei gleichzeitig breite nematische Phasen mit tiefen Übergangstemperaturen smektisch-nematisch beobachtet werden. Die Verbindungen der Formeln I bis III sind farblos, stabil und untereinander und mit anderen Flüssigkristallmaterialien gut mischbar.

Der Ausdruck "Alkyl" umfaßt geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppe mit 2-5 Kohlenstoffatomen sind im allgemeinen bevorzugt.

Der Ausdruck "Alkenyl" umfaßt geradkettige und verzweigte Alkenylgruppen mit 2-7 Kohlenstoffatomen, insbesondere die geradkettigen Gruppen. Besonders Alkenylgruppen sind C₂-C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇-4-Alkenyl. Beispiele bevorzugter Alkenylgruppen sind Vinyl, 1E-Propenyl, 1E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfaßt vorzugsweise geradkettige Gruppen mit endständigen Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" umfaßt vorzugsweise geradkettige Reste der Formel CₙH₂ₙ₊₁-O-(CH₂)ₘ, worin n und m jeweils unabhängig voneinander 1 bis 6 bedeuten. Vorzugsweise ist n = 1 und m 1 bis 6.

Durch geeignete Wahl der Bedeutungen von R¹ und R⁵ können die Ansprechzeiten, die Schwellenspannung, die Steilheit der Transmissionskennlinien etc. in gewünschter Weise modifiziert werden. Beispielsweise führen 1 E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten.

Das optimale Mengenverhältnis der Verbindungen der Formeln I und II + III hängt weitgehend von den gewünschten Eigenschaften, von der Wahl der Komponenten der Formeln I, II und/oder III und von der Wahl weiterer gegebenenfalls vorhandener Komponenten ab. Geeignete Mengenverhältnisse innerhalb des oben angegebenen Bereichs können von Fall zu Fall leicht ermittelt werden.

Die Gesamtmenge an Verbindungen der Formeln I bis III in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formeln I und II ist.

Die erfindungsgemäßen flüssigkristallinen Medien enthalten vorzugsweise neben einer oder mehreren Verbindungen der Formeln I, II und III als weitere Bestandteile 2 bis 40, insbesondere 4 bis 30 Komponenten. Ganz besonders bevorzugt enthalten diese Medien neben einer oder mehreren erfindungsgemäßen Verbindungen 7 bis 25 Komponenten. Diese weiteren Bestandteile werden vorzugsweise ausgewählt aus nematischen oder nematogenen (monotropen oder isotropen) Substanzen, insbesondere Substanzen aus den Klassen der Azoxybenzole, Benzylidenaniline, Biphenyle, Terphenyle, Phenyl- oder Cyclohexylbenzoate, Cyclohexan-carbonsäurephenyl- oder cyclohexyl-ester, Phenyl- oder Cyclohexyl-ester der Cyclohexylbenzoesäure, Phenyl- oder Cyclohexyl-ester der Cyclohexylcyclohexancarbonsäure, Cyclohexyl-phenylester der Benzoesäure, der Cyclohexancarbonsäure, bzw. der Cyclohexylcyclohexancarbonsäure, Phenylcyclohexane, Cyclohexylbiphenyle, Phenykyclohexylcyclohexane, Cyclohexylcyclohexane, Cyclohexylcyclohexylcyclohexene, 1,4-Bis-cyclohexylbenzole, 4,4'-Bis-cyclo-hexylbiphenyle, Phenyl- oder Cyclohexylpyrimidine, Phenyl-oder Cyclohexylpyridine, Phenyl- oder Cyclohexyldioxane, Phenyl- oder Cyclohexyl-1,3-dithiane, 1,2-Diphenylethane, 1,2-Dicyclohexylethane, 1-Phenyl-2-cyclohexylethane, 1-Cyclohexyl-2-(4-phenyl-cyclohexyl)-ethane, 1-Cyclohexyl-2-biphenylylethane, 1-Phenyl-2-cyclohexyl-phenylethane, gegebenenfalls halogenierten Stilbene, Benzylphenylether, Tolane und substituierten Zimtsäuren. Die 1,4-Phenylengruppen in diesen Verbindungen können auch fluoriert sein.

Die wichtigsten als weitere Bestandteile erfindungsgemäßer Medien in Frage kommenden Verbindungen lassen sich durch die Formeln 1, 2, 3, 4 und 5 charakterisieren:

R'-L-E-R" 1

R'-L-COO-E-R" 2

R'-L-OOC-E-R" 3

R'-L-CH₂CH₂-E-R" 4

R'-L-C≡C-E-R" 5

In den Formeln 1, 2, 3, 4 und 5 bedeuten L und E, die gleich oder verschieden sein können, jeweils unabhängig voneinander einen bivalenten Rest aus der aus -Phe-, -Cyc-, -Phe-Phe-, -Phe-Cyc-, -Cyc-Cyc-, -Pyr-, -Dio-, -G-Phe- und -G-Cyc- sowie deren Spiegelbilder gebildeten Gruppe, wobei Phe unsubstituiertes oder durch Fluor substituiertes 1,4-Phenylen, Cyc trans-1,4-Cyclohexylen oder 1,4-Cyclohexylen, Pyr Pyrimidin-2,5-diyl oder Pyridin-2,5-diyl, Dio 1,3-Dioxan-2,5-diyl und G 2-(trans-1,4-Cyclohexyl)-ethyl, Pyrimidin-2,5-diyl, Pyridin-2,5-diyl oder 1,3-Dioxan-2,5-diyl bedeuten.

Vorzugsweise ist einer der Reste L und E Cyc, Phe oder Pyr. E ist vorzugsweise Cyc, Phe oder Phe-Cyc. Vorzugsweise enthalten die erfindungsgemäßen Medien eine oder mehrere Komponenten ausgewählt aus den Verbindungen der Formeln 1, 2, 3, 4 und 5, worin L und E ausgewählt sind aus der Gruppe Cyc, Phe und Pyr und gleichzeitig eine oder mehrere Komponenten ausgewählt aus den Verbindungen der Formeln 1, 2, 3, 4 und 5, worin einer der Reste L und E ausgewählt ist aus der Gruppe Cyc, Phe und Pyr und der andere Rest ausgewählt ist aus der Gruppe -Phe-Phe-, -Phe-Cyc-, -Cyc-Cyc-, -G-Phe- und -G-Cyc-, und gegebenenfalls eine oder mehrere Komponenten ausgewählt aus den Verbindungen der Formeln 1, 2, 3, 4 und 5, worin die Reste L und E ausgewählt sind aus der Gruppe -Phe-Cyc-, -Cyc-Cyc-, -G-Phe- und -G-Cyc-.

R' und R" bedeuten in einer kleineren Untergruppe der Verbindungen der Formeln 1, 2, 3, 4 und 5 jeweils unabhängig voneinander Alkyl, Alkenyl, Alkoxy, Alkoxyalkyl, Alkenyloxy oder Alkanoyloxy mit bis zu 8 Kohlenstoffatomen. Im folgenden wird diese kleinere Untergruppe Gruppe A genannt und die Verbindungen werden mit den Teilformeln 1a, 2a, 3a, 4a und 5a bezeichnet. Bei den meisten dieser Verbindungen sind R' und R" voneinander verschieden, wobei einer dieser Reste meist Alkyl, Alkenyl, Alkoxy oder Alkoxyalkyl ist.

In einer anderen als Gruppe B bezeichneten kleineren Untergruppe der Verbindungen der Formeln 1, 2, 3, 4 und 5 bedeutet R" -F, -Cl, -NCS oder -(O)ᵢ CH₃₋₍ₖ₊₁₎ FₖCl₁, wobei i 0 oder 1 und k+1 1, 2 oder 3 sind; die Verbindungen, in denen R" diese Bedeutung hat, werden mit den Teilformeln 1b, 2b, 3b, 4b und 5b bezeichnet. Besonders bevorzugt sind solche Verbindungen der Teilformeln 1 b, 2b, 3b, 4b und 5b, in denen R" die Bedeutung -F, -Cl, -NCS, -CF₃, -OCHF₂ oder -OCF₃ hat.

In den Verbindungen der Teilformeln 1b, 2b, 3b, 4b und 5b hat R' die bei den Verbindungen der Teilformeln 1a-5a angegebene Bedeutung und ist vorzugsweise Alkyl, Alkenyl, Alkoxy oder Alkoxyalkyl.

In einer weiteren kleineren Untergruppe der Verbindungen der Formeln 1, 2, 3, 4 und 5 bedeutet R" -CN; diese Untergruppe wird im folgenden als Gruppe C bezeichnet und die Verbindungen dieser Untergruppe werden entsprechend mit Teilformeln 1c, 2c, 3c, 4c und 5 c beschrieben. In den Verbindungen der Teilformeln 1c, 2c, 3c, 4c und 5c hat R' die bei den Verbindungen der Teilformeln 1a-5a angegebene Bedeutung und ist vorzugsweise Alkyl, Alkoxy oder Alkenyl.

Neben den bevorzugten Verbindungen der Gruppen A, B und C sind auch andere Verbindungen der Formeln 1, 2, 3, 4 und 5 mit anderen Varianten der vorgesehenen Substituenten gebräuchlich. All diese Substanzen sind nach literaturbekannten Methoden oder in Analogie dazu erhältlich.

Die erfindungsgemäßen Medien enthalten neben erfindungsgemäßen Verbindungen der Formel I vorzugsweise eine oder mehrere Verbindungen, welche ausgewählt werden aus der Gruppe A und/oder Gruppe B und/oder Gruppe C. Die Massenanteile der Verbindungen aus diesen Gruppen an den erfindungsgemäßen Medien sind vorzugsweise
- Gruppe A:: 0 bis 90 %, vorzugsweise 20 bis 90 %, insbesondere 30 bis 90 %
- Gruppe B:: 0 bis 80 %, vorzugsweise 10 bis 80 %, insbesondere 10 bis 65 %
- Gruppe C:: 0 bis 80 %, vorzugsweise 5 bis 80 %, insbesondere 5 bis 50 %
wobei die Summe der Massenanteile der in den jeweiligen erfindungsgemäßen Medien enthaltenen Verbindungen aus den Gruppen A und/oder B und/oder C vorzugsweise 5 % bis 90 % und insbesondere 10 % bis 90 % beträgt.

Die erfindungsgemäßen Medien enthalten vorzugsweise 1 bis 40 %, insbesondere vorzugsweise 5 bis 30 % an erfindungsgemäßen Verbindungen. Weiterhin bevorzugt sind Medien, enthaltend mehr als 40 %, insbesondere 45 bis 90 % an erfindungsgemäßen Verbindungen. Die Medien enthalten vorzugsweise drei, vier oder fünf erfindungsgemäße Verbindungen.

Der Aufbau der erfindungsgemäßen IPS-Anzeige entspricht der für derartige Anzeigen üblichen Bauweise, wie z.B. beschrieben in der WO 91/10936 oder der EP 0 588 568. Dabei ist der Begriff der üblichen Bauweise hier weit gefaßt und umfaßt auch alle Abwandlungen und Modifikationen der IPS-Anzeige, insbesondere z.B. auch Matrix-Anzeigeelemente auf Basis poly-Si TFT oder MIM.

Ein wesentlicher Unterschied der erfindungsgemäßen Anzeigen zu den bisher üblichen besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe oder chirale Dotierstoffe zugesetzt werden.

C bedeutet eine kristalline, S eine smektische, S_{B} eine smektisch B, N eine nematische und I die isotrope Phase.

V₁₀ bezeichnet die Spannung für 10 % Transmission (Blickrichtung senkrecht zur Plattenoberfläche). tₒₙ bezeichnet die Einschaltzeit und t_{off} die Ausschaltzeit bei einer Betriebsspannung entsprechend dem 2,5fachen Wert von V₁₀. Δn bezeichnet die optische Anisotropie und nₒ den Brechungsindex (jeweils bei 589 nm). Δε bezeichnet die dielektrische Anisotropie (Δε = ε_{∥} , -ε_{⊥}, wobei ε_{∥} die Dielektrizitätskonstante parallel zu den Moleküllängsachsen und ε_{⊥} die Dielektrizitätskonstante senkrecht dazu bedeutet. Die elektrooptischen Daten wurden in einer IPS-Zelle bei 20 °C gemessen, sofern nicht ausdrücklich etwas anderes angegeben wird. Die optischen Daten wurden bei 20 °C gemessen, sofern nicht ausdrücklich etwas anderes angegeben wird.

Es wurde eine IPS-Testzelle gemäß WO 91/10936 mit einer Kammstruktur eingesetzt, wobei die Elektroden und die Elektrodenzwischenräume eine Abstand von 20 um aufweisen.

Die Schichtdicke d des Flüssigkristallmaterials beträgt 5 µm. Die Zelle weist ferner auf:

| | |
|---|---|
| Ausgangsverdrillungswinkel | 0° |
| Ausrichtungswinkel | 5° |
| Tilt-Anstellwinkel | 3° |

Die Zellen sind im "Aus" Zustand dunkel.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste CₙH₂ₙ₊₁ sind geradkettige Alkylreste mit n bzw. m C-Atomen. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich ein Code für die Substituenten R¹, R², L¹ und L² und L³

| Code für R¹, R², L¹, L², L³ | R¹ | R² | L¹ | L² | L³ |
|---|---|---|---|---|---|
| nm | CₙH₂ₙ₊₁ | CₘH₂ₘ₊₁ | H | H | H |
| nOm | CₙH₂ₙ₊₁ | OCₘH₂ₘ₊₁ | H | H | H |
| nO.m | OCₙH₂ₙ₊₁ | CₘH₂ₘ₊₁ | H | H | H |
| n | CₙH₂ₙ₊₁ | CN | H | H | H |
| nN.F | CₙH₂ₙ₊₁ | CN | F | H | H |
| nF | CₙH₂ₙ₊₁ | F | H | H | H |
| nOF | OCₙH₂ₙ₊₁ | F | H | H | H |
| nCl | CₙH₂ₙ₊₁ | Cl | H | H | H |
| nF.F | CₙH₂ₙ₊₁ | F | F | H | H |
| nCF₃ | CₙH₂ₙ₊₁ | CF₃ | H | H | H |
| nOCF₃ | CₙH₂ₙ₊₁ | OCF₃ | H | H | H |
| nOCF₃ | CₙH₂ₙ₊₁ | OCF₃ | H | H | H |
| nOCF₂ | CₙH₂ₙ₊₁ | OCHF₂ | H | H | H |
| nS | CₙH₂ₙ₊₁ | NCS | H | H | H |
| rVsN | CᵣH₂ᵣ₊₁-CH=CH-CₛH₂ₛ- | CN | H | H | H |
| rEsN | CᵣH₂ᵣ₊₁-O-C₂H₂ₛ- | CN | H | H | H |
| nAm | CₙH₂ₙ₊₁ | COOCₘH₂ₘ₊₁ | H | H | H |
| nF.F.F | CₙH₂ₙ₊₁ | F | F | F | H |
| nCl.F.F | CₙH₂ₙ₊₁ | Cl | F | F | H |
| nCF₃.F.F | CₙH₂ₙ₊₁ | CF₃ | F | F | H |
| nOCF₃.F.F | CₙH₂ₙ₊₁ | OCF₃ | F | F | H |
| nOCF₂.F.F | CₙH₂ₙ₊₁ | OCHF₂ | F | F | H |
| nOCF₃.F | CₙH₂ₙ₊₁ | OCF₃ | F | H | H |
| nmFF | CₙH₂ₙ₊₁ | CₘH₂ₘ₊₁ | F | H | F |
| nOmFF | CₙH₂ₙ₊₁ | CₘH₂ₘ₊₁ | F | H | F |

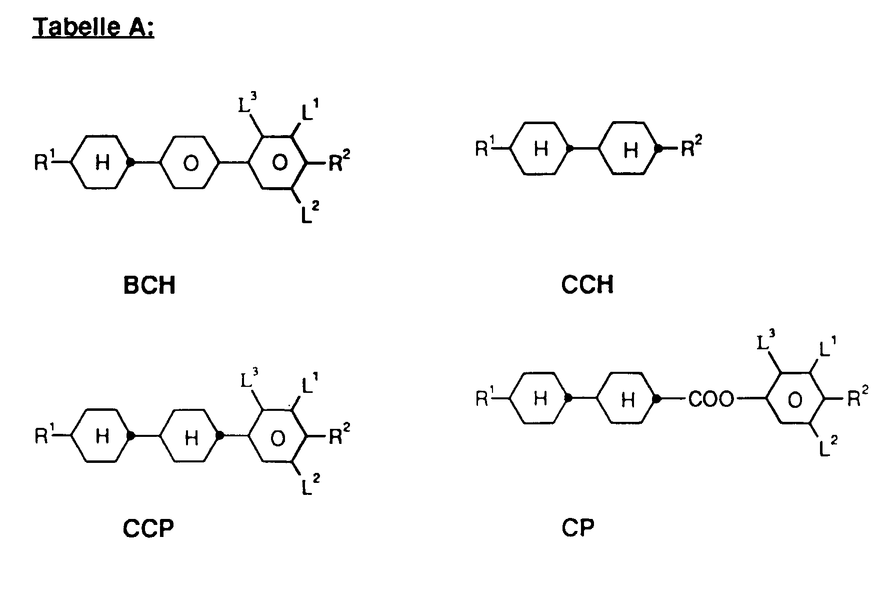

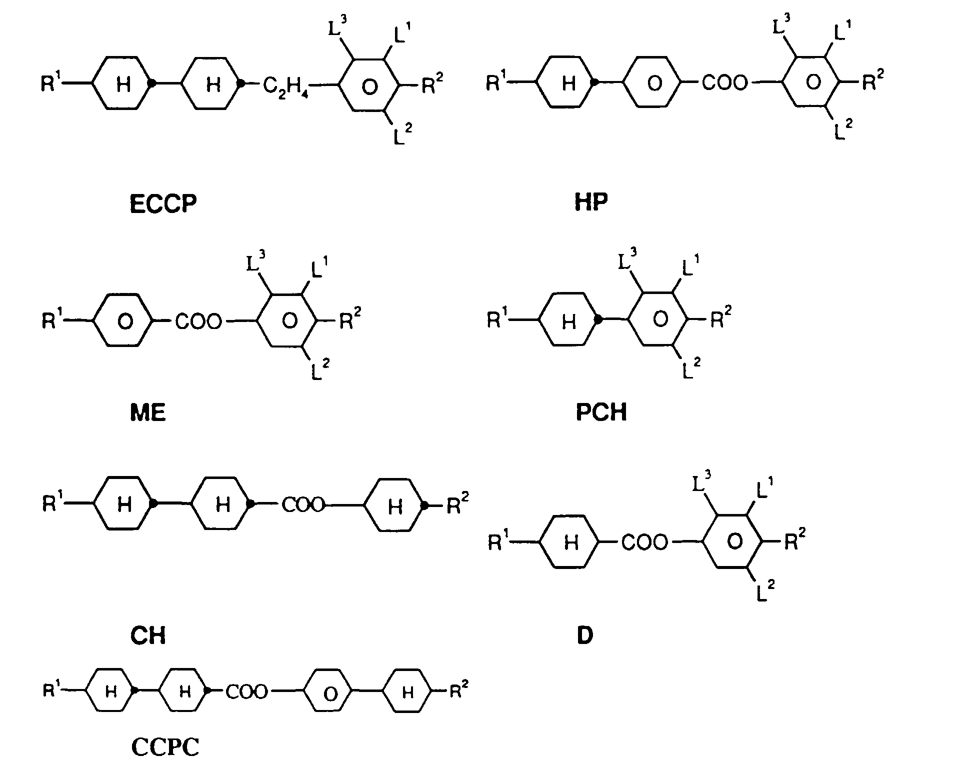

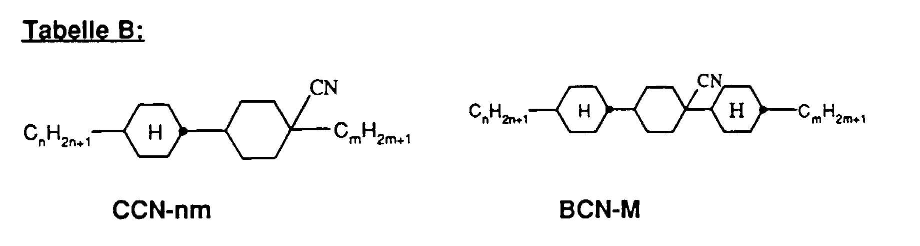

### Beispiel 1

Eine IPS-Anzeige enthält eine nematische Mischung mit

| | |
|---|---|
| Klärpunkt | +72 °C |
| Δn | 0,0533 |
| nₒ | 1,4700 |
| Δε | -7,3 |
| ε_{⊥} | 11,7 |
| Viskosität (20 °C) | 54 mm² S⁻¹ |

bestehend aus

| | |
|---|---|
| CCN-33 | 18,00 |
| CCN-47 | 18,00 |
| CCN-55 | 18,00 |
| D-302FF | 11,00 |
| D-402FF | 11,00 |
| D-502FF | 10,00 |
| CH-43 | 3,00 |
| CCH-34 | 4,00 |
| CCPC-33 | 4,00 |
| CCPC-34 | 3,00 |

und weist einen hohen Kontrast und niedrige Schaltzeiten auf.

### Beispiel 2

Eine IPS-Anzeige enthält eine nematische Mischung mit

| | |
|---|---|
| Klärpunkt | +75 °C |
| Δn | 0,0565 |
| nₒ | 1,5238 |
| Δε | -4,5 |

bestehend aus

| | |
|---|---|
| CCN-33 | 7,00 |
| CCN-55 | 10,00 |
| D-302FF | 10,00 |
| D-402FF | 8,00 |
| D-502FF | 15,00 |
| CH-33 | 5,00 |
| CH-35 | 5,00 |
| CH-43 | 5,00 |
| CCH-34 | 24,00 |
| CCH-301 | 4,00 |
| CCH-303 | 7,00 |

und weist einen hohen Kontrast und niedrige Schaltzeiten auf.

### Beispiel 3

Eine IPS-Anzeige enthält eine nematische Mischung mit

| | |
|---|---|
| Klärpunkt | +78 °C |
| Δn | 0,0539 |
| nₒ | 1,5217 |
| Δε | -5,0 |

bestehend aus

| | |
|---|---|
| CCN-47 | 14,00 |
| CCN-55 | 10,00 |
| D-302FF | 4,00 |
| D-402FF | 10,00 |
| D-502FF | 14,00 |
| CH-35 | 10,00 |
| CH-35 | 5,00 |
| CH-34 | 26,00 |
| CCH 301 | 4,00 |
| CCH 303 | 3,00 |

und weist einen hohen Kontrast und niedrige Schaltzeiten auf.

### Beispiel 4

Eine IPS-Anzeige enthält eine nematische Mischung mit

| | |
|---|---|
| Klärpunkt | +79°C |
| Δn | 0,0525 |
| nₒ | -4,7 |
| Viskosität (20 °C) | 30 mm² . s⁻¹ |

bestehend aus

| | |
|---|---|
| CCN-33 | 13,00 |
| CCN-47 | 10,00 |
| CCN-55 | 10,00 |
| D-302FF | 7,00 |
| D-402FF | 10,00 |
| D-502FF | 10,00 |
| CH-35 | 9,00 |
| CH-45 | 9,00 |
| CCH-34 | 22,00 |

und weist einen hohen Kontrast und niedrige Schaltzeiten auf.

### Vergleichsbeispiel

Eine IPS-Anzeige enthält die nematische Mischung ZLI-2806 mit

| | |
|---|---|
| Klärpunkt | +100 °C |
| Δn | 0,0437 |
| Δε | -4,8 |
| Viskosität (20 °C) | 57 mm² · s⁻¹ |

bestehend aus

| | |
|---|---|
| CCN-47 | 20,00 |
| CCN-55 | 21,00 |
| CCH-301 | 11,00 |
| CCH-302 | 10,00 |
| CH-33 | 4,00 |
| CH-35 | 4,00 |
| CH-43 | 4,00 |
| CH-45 | 4,00 |
| BCN-55 | 22,00 |

und weist eine höhere Schaltzeit als die Anzeige von Beispiel 4 auf, bzw. eine höhere Schwellenspannung als die Anzeige von Beispiel 1 auf.

## Patentansprüche

1. Elektrooptische Flüssigkristallanzeige
- mit einer Umorientierungsschicht zur Umorientierung der Flüssigkristalle, deren Feld eine signifikante Komponente parallel zur Flüssigkristallschicht aufweist,
- enthaltend ein flüssigkristallines Medium mit negativer dielektrischer Anisotropie, dadurch gekennzeichnet, daß das Medium
eine Doppelbrechung (Δn) < 0,10 aufweist und
mindestens eine mesogene Verbindung der Formel I enthält; 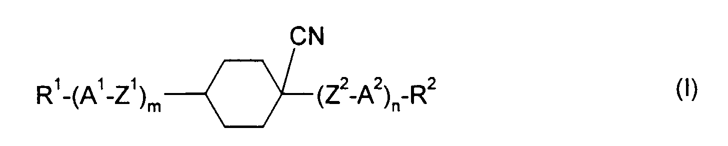 und mindestens eine Verbindung der Formel II 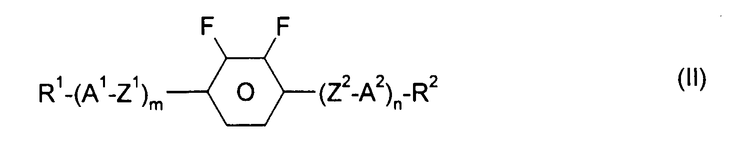 worin jeweils
R¹ und R² jeweils einen unsubstituierten, einen einfach durch CN oder CF₃ oder einen mindestens einfach durch Halogen substituierten Alkyl- oder Alkenylrest mit 1 bis 15 C-Atomen, wobei in diesen Resten auch eine oder mehrere CH₂-Gruppen jeweils unabhängig voneinander durch -O-, -S-, 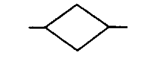 -CO-, -CO-O-, -O-CO- oder -O-CO-O- so ersetzt sein können, daß O-Atome nicht direkt miteinander verknüpft sind,
A¹ und A² jeweils unabhängig voneinander einen
(a) trans-1,4-Cyclohexylenrest, worin auch eine oder mehrere nicht benachbarte CH₂-Gruppen durch -O- und/oder -S- ersetzt sein können,
(b) 1,4-Phenylenrest, worin auch eine oder zwei CH-Gruppen durch N ersetzt sein können,
(c) Rest aus der Gruppe 1,4-Cyclohexenylen, 1,4-Bicyclo(2,2,2)-octylen, Piperidin-1,4-diyl, Naphthalin-2,6-diyl, Decahydronaphthalin-2,6-diyl und 1,2,3,4-Tetrahydronaphthalin-2,6-diyl,
wobei die Reste (a) und (b) durch ein oder zwei Fluor substituiert sein können,
Z¹ und Z² jeweils unabhängig voneinander -CO-O-, -O-CO-, -CH₂O-, -OCH₂-, -CH₂CH₂-, -CH=CH-, -C≡C- oder eine Einfachbindung, einer der Reste Z¹ und Z² auch -(CH₂)₄- oder -CH=CH-CH₂CH₂-,
m und n 0, 1 oder 2 und
m+n 1, 2 oder 3
bedeuten.

2. Flüssigkristallanzeige nach Anspruch 1, dadurch gekennzeichnet, daß das Medium eine dielektrische Anisotropie Δε < -4,6 aufweist.

3. Flüssigkristallanzeige nach einem der Ansprüche 1 bis 2, dadurch gekennzeichnet, daß das Medium mindestens eine Verbindung der Formel III enthält,
R³-(A³-Z³)ₒ-A⁴-R⁴ III
worin
R³ und R⁴ jeweils unabhängig voneinander die für R¹ angegebene Bedeutung besitzen,
A³ und A⁴ jeweils unabhängig die für A¹ und A² angegebene Bedeutung besitzen,
Z³ jeweils unabhängig voneinander die für Z¹ und Z² angegebene Bedeutung aufweist, und
o 1, 2 oder 3 ist.

4. Anzeige nach einem der Ansprüche 1 bis 3, dadurch gekennzeichnet, daß die Bildelemente mittels Aktivmatrix angesteuert werden.

5. Flüssigkristallines Medium mit negativer dielektrischer Anisotropie, welches eine Zusammensetzung gemäß der Ansprüche 2 bis 4 aufweist.

6. Flüssigkristallines Medium nach Anspruch 5, dadurch gekennzeichnet, daß es
- 15 bis 65 Gew.% mindestens einer Verbindung der Formel I,
- 15 bis 45 Gew.% mindestens einer Verbindung der Formel II,
- 10 bis 55 Gew.% mindestens einer Verbindung der Formel III,
enthält.

7. Flüssigkristallines Medium nach Anspruch 6, dadurch gekennzeichnet, daß es
- 20 bis 60 Gew.% mindestens einer Verbindung der Formel I,
- 15 bis 45 Gew.% mindestens einer Verbindung der Formel II,
- 10 bis 55 Gew.% mindestens einer Verbindung der Formel III,
enthält.

8. Flüssigkristallines Medium nach einem der Ansprüche 6 bis 7, dadurch gekennzeichnet, daß es
- 15 bis 65 Gew.% mindestens einer Verbindung der Formel I,
- 20 bis 40 Gew.% mindestens einer Verbindung der Formel II,
- 10 bis 55 Gew.% mindestens einer Verbindung der Formel III,
enthält.

9. Flüssigkristallines Medium nach einem der Ansprüche 6 bis 8, dadurch gekennzeichnet, daß es
- 20 bis 60 Gew.% mindestens einer Verbindung der Formel I,
- 20 bis 40 Gew.% mindestens einer Verbindung der Formel II,
- 10 bis 50 Gew.% mindestens einer Verbindung der Formel III,
enthält.

10. Flüssigkristallines Medium nach mindestens einem der Ansprüche 5 bis 9, dadurch gekennzeichnet, daß es:
- mindestens eine Verbindung der Formel la enthält 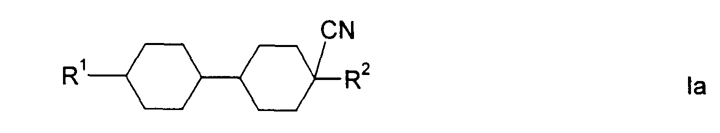
- mindestens eine Verbindung der Formel lla enthält, 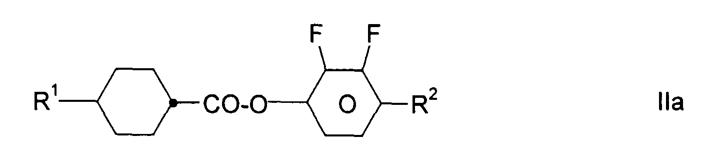
- mindestens eine Verbindung ausgewählt aus den Formeln IIIa, IIIb und IIIc enthält, 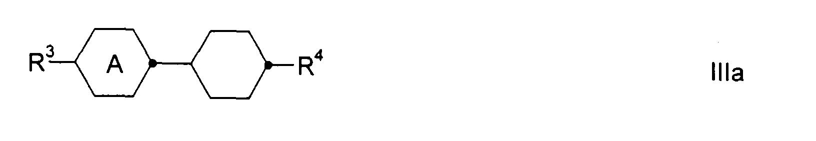 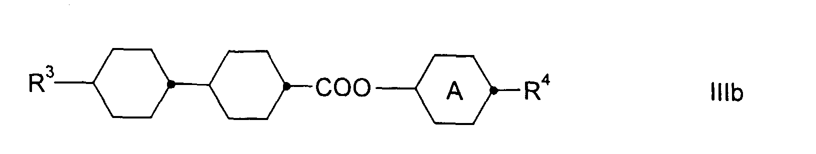 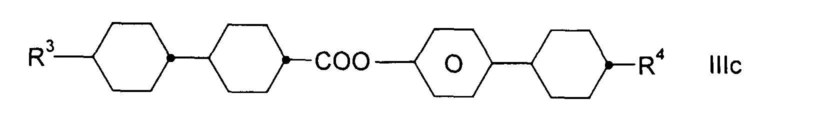 worin 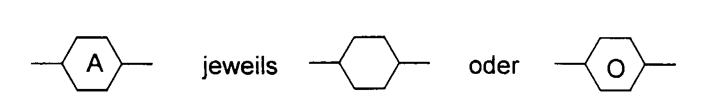 bedeutet, und R¹, R², R³ und R⁴ die jeweils angegebene Bedeutung besitzen.

## Claims

1. Electro-optical liquid-crystal display
- having a realignment layer for realigning the liquid crystals, where the field thereof has a significant component parallel to the liquid-crystal layer,
- comprising a liquid-crystalline medium having negative dielectric anisotropy, characterized in that the medium
has a birefringence (Δn) of < 0.10 and comprises at least one mesogenic compound of the formula I 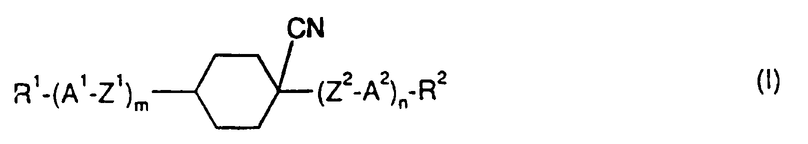 and at least one compound of the formula II 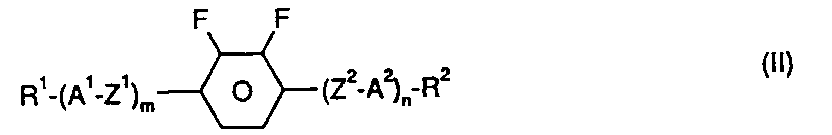 in each of which
R¹ and R² are each an alkyl or alkenyl radical having 1 to 15 carbon atoms which is unsubstituted, monosubstituted by CN or CF₃ or at least monosubstituted by halogen, where, in addition, one or more CH₂ groups in these radicals may each, independently of one another, be replaced by -O-, -S-, 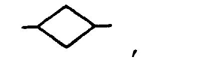 -CO-, -CO-O-, -O-CO- or -O-CO-O- in such a way that O atoms are not linked directly to one another,
A¹ and A² are each, independently of one another,
(a) a trans-1,4-cyclohexylene radical in which, in addition, one or more non-adjacent CH₂ groups may be replaced by -O- and/or -S-,
(b) a 1,4-phenylene radical in which, in addition, one or two CH groups may be replaced by N,
(c) a radical from the group consisting of 1,4-cyclohexenylene, 1,4-bicyclo[2.2.2]-octylene, piperidine-1,4-diyl, naphthalene-2,6-diyl, decahydronaphthalene-2,6-diyl and 1,2,3,4-tetrahydronaphthalene-2,6,diyl,
where the radicals (a) and (b) may be substituted by one or two fluorine atoms,
Z¹ and Z² are each, independently of one another, -CO-O-, -O-CO-, -CH₂O-, -OCH₂-, -CH₂CH₂-, -CH=CH-, -C≡C- or a single bond, or one of the radicals Z¹ and Z² is alternatively-(CH₂)₄- or -CH=CH-CH₂CH₂-,
m and n are 0, 1 or 2 and
m+n is 1, 2 or 3.

2. Liquid-crystal display according to Claim 1, characterized in that the medium has a dielectric anisotropy Δε of < -4.6.

3. Liquid-crystal display according to one of Claims 1 to 2, characterized in that the medium comprises at least one compound of the formula III
R³-(A³-Z³)ₒ-A⁴-R⁴ III
in which
R³ and R⁴ each, independently of one another, are as defined for R¹,
A³ and A⁴ each, independently of one another, are as defined for A¹ and A²,
Z³ in each case, independently of the others, is as defined for Z¹ and Z², and
o is 1, 2 or 3.

4. Display according to one of Claims 1 to 3, characterized in that the pixels are addressed by means of an active matrix.

5. Liquid-cyrstalline medium having negative dielectric anisotropy which has a composition according to Claims 2 to 4.

6. Liquid-crystalline medium according to Claim 5, characterized in that it comprises
- from 15 to 65 % by weight of at least one compound of the formula I,
- from 15 to 45 % by weight, of at least one compound of the formula II, and
- from 10 to 55 % by weight of at least one compound of the formula III.

7. Liquid-crystalline medium according to Claim 6, characterized in that it comprises
- from 20 to 60% by weight of at least one compound of the formula I,
- from 15 to 45% by weight of at least one compound of the formula II, and
- from 10 to 55% by weight of at least one compound of the formula III.

8. Liquid-crystalline medium according to one of Claims 6 to 7, characterized in that it comprises
- from 15 to 65% by weight of at least one compound of the formula I,
- from 20 to 40% by weight of at least one compound of the formula II, and
- from 10 to 55% by weight of at least one compound of the formula III.

9. Liquid-crystalline medium according to one of Claims 6 to 8, characterized in that it comprises
- from 20 to 60% by weight of at least one compound of the formula I,
- from 20 to 40% by weight of at least one compound of the formula II, and
- from 10 to 50% by weight of at least one compound of the formula III.

10. Liquid-crystalline medium according to at least one of Claims 5 to 9, characterized in that it comprises
- at least one compound of the formula Ia 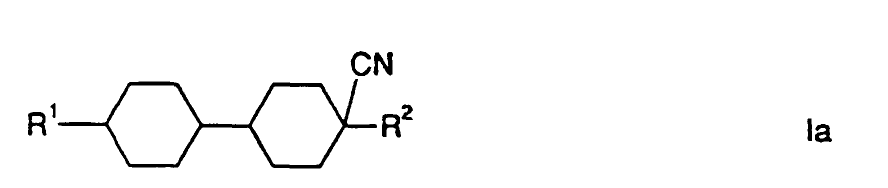
- at least one compound of the formula IIa, 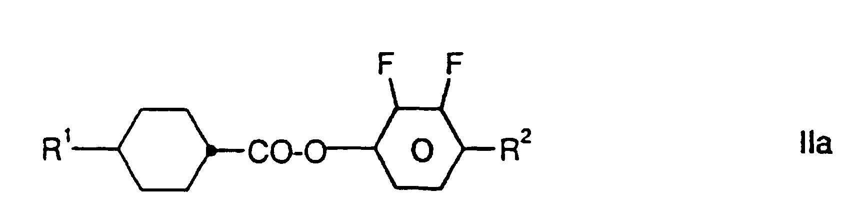
- at least one compound selected from the formulae IIIa, IIIb and IIIc 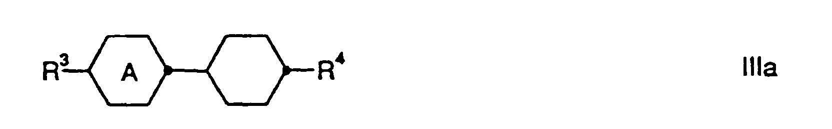 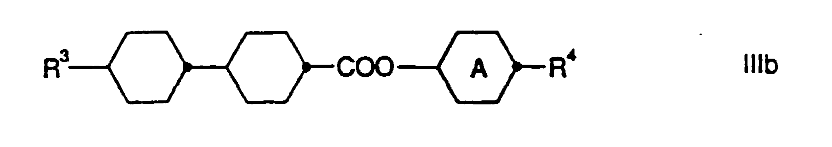 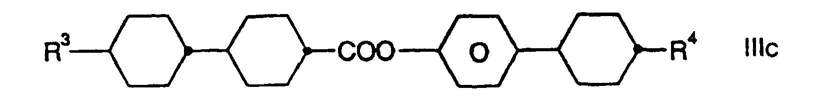 in which 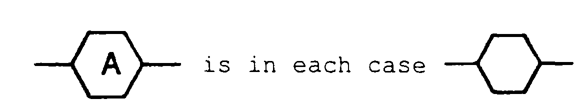 or 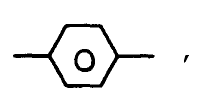 and R¹, R², R³ and R⁴ are each as defined above.

## Revendications

1. Afficheur à cristaux liquides électro-optiques
- comportant une couche de réorientation pour réorienter les cristaux liquides, dont le champ présente une composante significative parallèle à la couche de cristaux liquides,
- contenant un milieu cristallin liquide présentant une anisotropie diélectrique négative,
caractérisé en ce que ledit milieu présente une biréfringence (Δn) < 0,10 et contient au moins un composé mésogène de formule I : 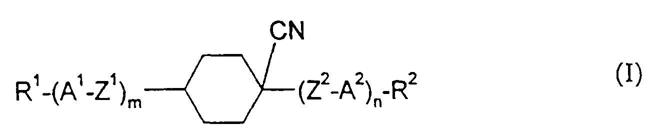 et au moins un composé de formule II : 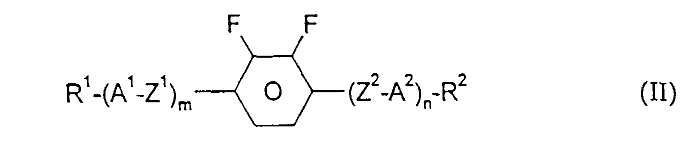 où
R¹ et R² représente un reste alkyle ou alcényle comportant 1 à 15 atomes de C, non substitué, monosubstitué par CN ou CF₃ ou au moins monosubstitué par un halogène, un ou plusieurs groupes CH₂ dans ces restes pouvant être également, indépendamment les uns des autres, remplacés par -O-, -S-, 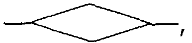 -CO-, -CO-O-, -O-CO- ou -O-CO-O-, de telle façon que les atomes d'oxygène ne soient pas directement reliés entre eux,
A¹ et A² représentent, indépendamment l'un de l'autre,
(a) un reste trans-1,4-cyclohexylène, un ou plusieurs groupes CH₂ non adjacents pouvant être également remplacés par -O- et/ou -S-,
(b) un reste 1,4-phénylène, un ou deux groupes CH pouvant être également remplacés par N,
(c) un reste du groupe constitué par le 1,4-cyclohexénylène, le 1,4-bicyclo-(2,2,2)octylène, le pipéridine-1,4-diyle, le naphtalène-2,6-diyle, le décahydronaphtalène-2,6-diyle et le 1,2,3,4-tétrahydronaphtalène-2,6-diyle,
les restes (a) et (b) pouvant être substitués par un ou deux fluor,
Z¹ et Z² représentent, indépendamment l'un de l'autre, -CO-O-, -O-CO-, -CH₂O-, -OCH₂-, -CH₂CH₂-, -CH=CH-, -C≡C- ou une simple liaison, l'un des restes Z¹ et Z² représentent également -(CH₂)₄-ou -CH=CH-CH₂CH₂-,
m et n sont égaux à 0, 1 ou 2 et
m+n est égal à 1, 2 ou 3.

2. Afficheur à cristaux liquides selon la revendication 1, caractérisé en ce que ledit milieu présente une anisotropie diélectrique Δε < -4,6.

3. Afficheur à cristaux liquides selon la revendication 1 ou 2, caractérisé en ce que ledit milieu contient au moins un composé de formule III :
R³-(A³-Z³)ₒ-A⁴-R⁴ III
où
R³ et R⁴ ont, indépendamment l'un de l'autre, la signification indiquée pour R¹,
A³ et A⁴ ont, indépendamment l'un de l'autre, la signification indiquée pour A¹ et A²,
Z³ a, indépendamment l'une de l'autre, la signification indiquée pour Z¹ et Z² et
o est égal à 1, 2 ou 3.

4. Afficheur selon l'une des revendications 1 à 3, caractérisé en ce que l'adressage des éléments d'image s'effectue au moyen de la matrice active.

5. Milieu cristallin liquide ayant une anisotropie diélectrique négative, présentant une composition selon les revendications 2 à 4.

6. Milieu cristallin liquide selon la revendication 5, caractérisé en ce qu'il contient :
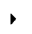 15 à 65 % en poids d'au moins un composé de formule I,
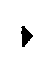 15 à 45 % en poids d'au moins un composé de formule II,
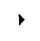 10 à 55 % en poids d'au moins un composé de formule III.

7. Milieu cristallin liquide selon la revendication 6, caractérisé en ce qu'il contient :
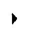 20 à 60 % en poids d'au moins un composé de formule I,
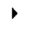 15 à 45 % en poids d'au moins un composé de formule II,
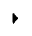 10 à 55 % en poids d'au moins un composé de formule III.

8. Milieu cristallin liquide selon la revendication 6 ou 7, caractérisé en ce qu'il contient :
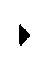 15 à 65 % en poids d'au moins un composé de formule I,
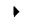 20 à 40 % en poids d'au moins un composé de formule II,
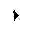 10 à 55 % en poids d'au moins un composé de formule III.

9. Milieu cristallin liquide selon l'une des revendications 6 à 8, caractérisé en ce qu'il contient :
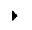 20 à 60 % en poids d'au moins un composé de formule I,
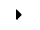 20 à 40 % en poids d'au moins un composé de formule II,
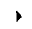 10 à 50 % en poids d'au moins un composé de formule III.

10. Milieu cristallin liquide selon au moins l'une des revendications 5 à 9, caractérisé en ce qu'il contient :
- au moins un composé de formule Ia : 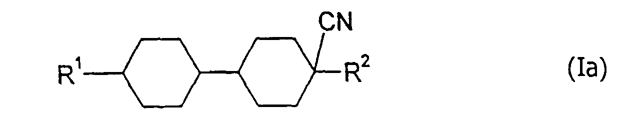
- au moins un composé de formule IIa : 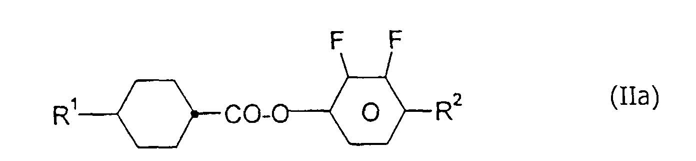
- au moins un composé choisi parmi les formules IIIa, IIIb et IIIC : 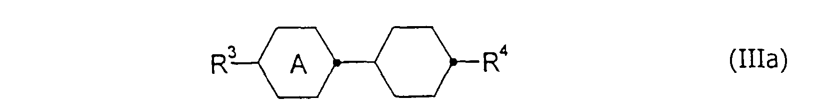 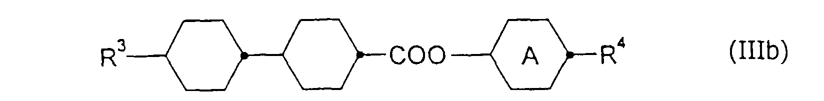 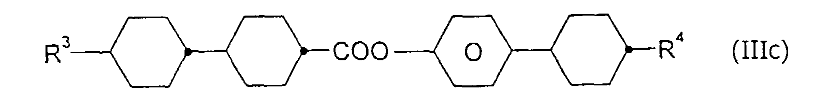 où 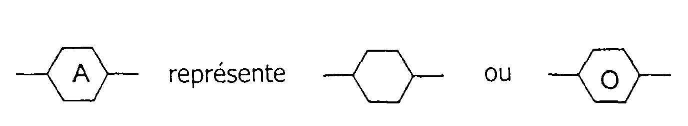 et R¹, R², R³ et R⁴ ont les significations précédemment indiquées.
